(19) **Europäisches Patentamt**

**European Patent Office**

**Office européen des brevets**

(11) **EP 1 031 609 A1**

(12) **EUROPEAN PATENT APPLICATION**

(43) Date of publication:
**30.08.2000 Bulletin 2000/35**

(51) Int. Cl.$^7$: **C08L 55/02**, C08L 53/02, C08L 51/04, C08L 101/00

(21) Application number: **00301115.2**

(22) Date of filing: **14.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.02.1999 JP 4967799**

(71) Applicant:
**Techno Polymer Co., Ltd.
Tokyo (JP)**

(72) Inventors:
• **Sumimoto, Norifumi
Tokyo (JP)**
• **Oomura, Katsurou
Tokyo (JP)**

(74) Representative:
**Benson, John Everett
J. A. Kemp & Co.,
14 South Square,
Gray's Inn
London WC1R 5LX (GB)**

(54) **Thermoplastic elastomer composition with excellent wear resistance**

(57)     The present invention relates to a thermoplastic elastomer composition with excellent wear resistance comprising:

(A) 1 to 50 parts by weight of a rubber-reinforced thermoplastic resin obtained by graft-polymerizing (a) 80 to 20 parts by weight of an aromatic vinyl monomer or a mixture of an aromatic vinyl monomer and other vinyl monomer copolymerizable therewith in the presence of (b) 20 to 80 parts by weight of a rubber-like polymer, said rubber-reinforced thermoplastic resin having a graft ratio of 5 to 300%, the intrinsic viscosity ($\eta$) of the ungrafted moiety being 0.05 to 3.0 dl/g as measured in 30°C methylethyl ketone, and the total weight of (a) and (b) being 100 parts by weight; and
(B) 99 to 50 parts by weight of a thermoplastic elastomer, the total weight of (A) and (B) being 100 parts by weight.

**EP 1 031 609 A1**

## Description

The present invention relates to a thermoplastic elastomer composition with excellent wear resistance. More particularly, it relates to a thermoplastic elastomer composition with excellent wear resistance comprising, as main components, a rubber-reinforced thermoplastic resin and a thermoplastic elastomer.

Recently, demand for a material which is capable of molding the articles with good surface appearance by using a thermoplastic resin molding machine (such as injection molding machine, extrusion molding machine, blow molding machine, vacuum forming machine, etc.) and has the same level of performance quality as crosslinked rubbers, is increasing in the fields of electrical products, engineering, footwear, sports equipment and such.

Hitherto, researches have been made on the styrene-, olefin-, urethane- and ester-based elastomers as the thermoplastic elastomer compositions that can be utilized as the said molding material. However, the styrene- and olefin-elastomer are unsatisfactory in wear resistance and surface appearance of the articles molded therefrom and also lack in tear and tensile strength, while the urethane- and ester-based elastomers are expensive and hard, so that these materials could hardly comply with the demand.

Among these thermoplastic elastomer compositions, those comprising a styrene-butadiene block copolymer are used relatively widely because they show high rubber elasticity even if not cured and are capable of molding by an ordinary thermoplastic resin molding machine, but they still have such problems as rough surface of the molded articles and conspicuous weldline.

On the other hand, crosslinked rubbers are excellent in tear and tensile strength, but have the problem that they are incapable of molding by a thermoplastic resin working machine and are also poor in productivity and can not satisfy the demand.

As a result of the present inventors' earnest studies to solve the above problems, it has been found that a composition comprising a rubber-reinforced thermoplastic resin obtained by polymerizing a monomer or a monomeric mixture on a rubber-like polymer and a thermoplastic elastomer has high wear resistance and also excels in molding workability, tear strength, tensile strength and surface appearance of the molded articles.

The present invention has been attained on the basis of the above finding.

The object of the present invention is to provide a thermoplastic elastomer composition with excellent wear resistance comprising a rubber-reinforced thermoplastic resin and a thermoplastic elastomer as main components.

To attain the above aim, in the first aspect of the present invention, there is provided a thermoplastic elastomer composition with excellent wear resistance comprising:

(A) 1 to 50 parts by weight of a rubber-reinforced thermoplastic resin obtained by graft-polymerizing (a) 80 to 20 parts by weight of an aromatic vinyl monomer or a mixture of an aromatic vinyl monomer and other vinyl monomer copolymerizable therewith in the presence of (b) 20 to 80 parts by weight of a rubber-like polymer, said rubber-reinforced thermoplastic resin having a graft ratio of 5 to 300%, the intrinsic viscosity ($\eta$) of the ungrafted moiety being 0.05 to 3.0 dl/g as measured in 30°C methylethyl ketone, and the total weight of (a) and (b) being 100 parts by weight; and

(B) 99 to 50 parts by weight of a thermoplastic elastomer, the total weight of (A) and (B) being 100 parts by weight.

The composition according to the present invention comprises (A) a rubber-reinforced thermoplastic resin and (B) a thermoplastic elastomer. The rubber-reinforced thermoplastic resin (A) is obtained by polymerizing (b) an aromatic vinyl monomer or a mixture of an aromatic vinyl monomer and other monomer copolymerizable therewith in the presence of (a) a rubber-like polymer.

The rubber-like polymers (a) usable in the present invention include diene type and non-diene type rubber-like polymers.

Examples of the diene type rubber-like polymers include polybutadiene, polyisoprene, butyl rubber, styrene-butadiene copolymer (preferred styrene content: 5 to 60% by weight), styrene-isoprene copolymer, butadiene-acrylonitrile copolymer, butadiene-(meth)acrylic ester copolymer, styrene-butadiene block copolymer, styrene-isoprene block copolymer and the like.

Examples of the non-diene type rubber-like polymers include etylene-$\alpha$-olefinic rubber-like polymers such as ethylene-$\alpha$-olefine copolymer and ethylene-$\alpha$-olefin-polyene copolymer; hydrogenation products of diene-based polymers such as hydrogenation product of styrene-butadiene (block) copolymer, hydrogenation product of butadiene-acrylonitrile copolymer, hydrogenation product of butadiene-(meth)acrylic ester copolymer, hydrogenation products of other butadiene-based (co)polymers, and hydrogenation product of styrene-butadiene random copolymer; silicone rubbers, and acrylic rubbers.

Of these rubber-like polymers, polybutadiene, styrene-butadiene copolymer, hydrogenation products of butadiene (co)polymers, silicone rubbers and acrylic rubbers are preferred. Polybutadiene and styrene-butadiene copolymer are especially preferred.

These rubber-like polymers may be used either singly or as a mixture of two or more types.

The average rubber particle size of the rubber-like polymer (a) in the rubber-reinforced thermoplastic resin (A) according to the present invention is preferably 0.05 to 2 μm, more preferably 0.10 to 1.5 μm, particularly 0.10 to 1.0 μm.

The toluene insolubles content in the rubber-like polymer (a), though not specified, is generally in the range of 0 to 95% by weight.

The "toluene insolubles content" (gel content) referred to in the present invention is a value determined in the following way using a sample prepared by coagulating the rubber-like polymer (a) with sulfuric acid.

A coagulated and dried rubber-like polymer ((x) g) is immersed in 100 ml of toluene, and after left at room temperature for 48 hours, the solution is passed through a 100-mesh metal gauze. A portion ((y) ml) of the filtrate is correctly collected and evaporated to dryness, and the residual solid matter (toluene solubles: (z) g) is weighed and the toluene insolubles content is determined from the following equation.

$$\text{Toluene insolubles content (wt\%)} = \{(x\text{-}z \times \frac{100}{y})/x\} \times 100$$

Adjustment of the toluene insolubles content can be easily made by selecting the type and amount of the molecular weight modifier. Such adjustment can also be made by other means such as addition of a crosslinking agent, selection of the amount of the polymerization initiator in polymerization, or selection of the polymerization starting temperature. A desired rubber-like polymer (a) for use in the present invention can be obtained by combining the above factors.

It is also possible to use two or more rubber-like polymers differing in average rubber particle size and toluene insolubles content by mixing them at an optional rate.

The content of the rubber-like polymer (a) in the component (A) is 20 to 80% by weight, preferably 30 to 75% by weight, more preferably 40 to 70% by weight. If the rubber-like polymer content is less than 20% by weight, the component (A) may be unsatisfactory in miscibility and also lowered in wear resistance. On the other hand, if the polymer content exceeds 80% by weight, the component (A) may be reduced in compatibility with the component (B), resulting in deterioration of molding workability of the composition and surface appearance of the molded article.

The rubber-reinforced thermoplastic resin (A) according to the present invention can be obtained by polymerizing (b) an aromatic vinyl monomer or a mixture of an aromatic vinyl monomer and other vinyl monomer copolymerizable therewith in the presence of (a) a rubber-like polymer.

The aromatic vinyl monomers usable as (b) in the present invention include, for example, styrene, t-butylstyrene, α-methylstyrene, p-methylstyrene, divinylbenzene, 1,1-diphenylstyrene, N,N-diethyl-p-aminoethylstyrene, N,N-diethyl-p-aminomethylstyrene, vinylpyridine, vinylxylene, monochlorostyrene, dichlorostyrene, monobromostyrene, dibromonostyrene, tribromostyrene, fluorostyrene, ethylstyrene, and vinylnaphthalene. Styrene and α-methylstyrene are preferred. These aromatic vinyl monomers may be used either singly or as a mixture of two or more of them.

The amount of the aromatic vinyl monomer used in the component (A) is preferably 20 to 100% by weight, more preferably 30 to 100% by weight, particularly 40 to 100% by weight in (a). If the amount of the aromatic vinyl monomer amount in the mixture is less than 20% by weight, the sufficient moldability may not be obtained.

As other vinyl monomer copolymerizable with the said aromatic vinyl monomer, which is used optionally in (b) in the present invention, there can be exemplified vinyl cyanide compounds such as acrylonitrile and methacrylonitrile; acrylic esters such as methyl acrylate, ethyl acrylate, propyl acrylate, butyl acrylate, amyl acrylate, hexyl acrylate, octyl acrylate, 2-ethylhexyl acrylate, cyclohexyl acrylate, dodecyl acrylate, octadecyl acrylate, phenyl acrylate and benzyl acrylate; methacrylic esters such as methyl methacrylate, ethyl methacrylate, propyl methacrylate, butyl methacrylate, amyl methacrylate, hexyl methacrylatge, octyl methacrylate, 2-ethylhexyl methacrylate, cyclohexyl methacrylate, dodecyl methacrylate, octadecyl methacrylate, phenyl methacrylate and benzyl methacrylate; unsaturated acid anhydrides such as maleic anhydride, itaconic anhydride and citraconic anhydride; unsaturated acids such as acrylic acid and methacrylic acid; imide compounds of α,β-unsaturated dicarboxylic acids such as maleimide, N-methylmaleimide, N-butylmaleimide, N-(p-methylphenyl)maleimide, N-phenylmaleimide and N-cyclohexylmaleimide; epoxy group-containing unsaturated compounds such as glycidyl methacrylate and allylglycidyl ether; unsaturated carboxylic acid amides such as acrylamide and methacrylamide; amino group-containing unsaturated compounds such as acrylamine, aminomethyl methacrylate, aminoether methacrylate, aminopropyl methacrylate and aminostyrene; hydroxyl group-containing unsaturated compounds such as 3-hydroxy-1-propene, 4-hydroxy-1-butene, cis-4-hydroxy-2-butene, trans-4-hydroxy-2-butene, 3-hydroxy-2-methyl-1-propene, 2-hydroxyethyl acrylate, 2-hydroxyethyl methacrylate and hydroxystyrene; and oxazoline group-containing unsaturated compounds such as vinyl oxazoline.

Of these vinyl monomers, acrylonitrile, butyl acrylate, methyl methacrylate and methacrylic acid are preferred. These "other" vinyl monomers may be used either singly or as a mixture of two or more.

The content of the monomer or monomeric mixture (b) in the component (A) is 80 to 20% by weight, preferably 70 to 25% by weight, more preferably 60 to 30% by weight.

The rubber-reinforced thermoplastic resin (A) according to the present invention can be produced by subjecting the monomer or monomeric mixture (b) to radical graft polymerization such as emulsion polymerization, suspension polymerization, solution polymerization or bulk polymerization in the presence of the rubber-like polymer (a). Of these, emulsion polymerization is preferred. A polymerization initiator, a chain transfer agent (molecular weight modifier), an emulsifier and water may be used for emulsion polymerization.

In treatment of the monomer or monomeric mixture (b) and the rubber-like polymer (a) for producing the rubber-reinforced thermoplastic resin (A), the monomer or monomeric mixture (b) may be polymerized by adding it all at one time or by adding it in portions or continuously in the presence of the whole amount of the rubber-like polymer (a). Polymerization may be carried out by using a combination of these addition methods. Also, the whole amount or a part of the rubber-like polymer (a) may be added in the course of the polymerization.

As the polymerization initiator, it is possible to use the redox type comprising a combination of an organic hydroperoxide such as cumene hydroperoxide, diisopropylbenzene hydroperoxide or paramenthane hydroperoxide and a reducing agent such as a sugar-containing pyrophosphoric acid formulation or a sulfoxylate formulation, or to use peroxides such as persulfate, azobisisobutyronitrile, benzoyl peroxide, etc. Use of an oil-soluble initiator, especially a redox type comprising a combination of an organic hydroperoxide such as mentioned above and a reducing agent such as mentioned above is preferred. It is possible to use only one polymerization initiator or a mixture of two or more types of polymerization initiator. Further, the said oil-soluble initiator may be used in combination with a water-soluble type. In such a combination, the ratio of the water-soluble initiator should be not more than 50% by weight, preferably not more than 25% by weight of the overall amount of the initiators used.

The polymerization initiator may be added either all at one time or continuously to the polymerization system. The amount of the polymerization initiator added is usually 0.1 to 1.5% by weight, preferably 0.2 to 0.7% by weight based on the monomer or monomeric mixture (b).

As the chain transfer agent, there can be used, for example, mercaptans such as octyl mercaptan, n-dodecyl mercaptan, t-dodecyl mercaptan, n-hexadecyl mercaptan, n-tetradecyl mercaptan and t-tetradecyl mercaptan, hydrocarbons such as tetraethylthiuram sulfide, carbon tetrachloride, ethylene bromide and pentaphenylethane, and dimers of acrolein, methacrolein, allyl alcohol, 2-ethylhexyl thioglycolate, $\alpha$-methylstyrene and the like. These chain transfer agents may be used either singly or as a mixture of two or more types.

As for the way of addition of the chain transfer agent, it may be added all at one time, in portions or continuously, or by combining these methods.

The amount of the chain transfer agent added is usually about 0.01 to 0.2% by weight based on the monomer or monomeric mixture (b).

As the emulsifier, the anionic, nonionic and ampholytic surfactants can be used. The anionic surfactants usable in the present invention include, for example, sulfuric esters of higher alcohols, alkylbenzenesulfonates, fatty acid sulfonates, phosphates and fatty acid salts. The nonionic surfactants include the alkyl ester type, alkyl ether type and alkyl phenyl type of ordinary polyethylene glycol. Examples of the amopholytic surfactants usable in the present invention include those comprising a carboxylate, sulfuric ester salt, sulfonate, phosphoric ester salt or the like as the anionic moiety and an amine salt, quaternary ammonium salt or the like as the cationic moiety. These emulsifiers may be used either singly or as a mixture of two or more types.

The emulsifier may be added all at one time, in portions or continuously, or by combining these methods.

The amount of the emulsifier used is usually about 0.1 to 5.0% by weight based on the monomer or monomeric mixture (b).

The rubber-reinforced thermoplastic resin (A) used in the present invention is preferably produced by emulsion polymerization at 10 to 95°C, preferably 30 to 95°C. An antioxidant may be added at the conclusion of the polymerization.

The thus produced rubber-reinforced thermoplastic resin (A) is passed through the steps of coagulation and recovery, then dried and powdered. As the coagulant for the coagulation step, sulfuric acid, acetic acid, magnesium sulfate, calcium chloride, aluminum sulfate or the like can be used in the form of an aqueous solution. Use of sulfuric acid, magnesium sulfate or calcium chloride is preferred. The resin (A) may be subjected to spray drying instead of coagulation.

The graft ratio of the rubber-reinforced thermoplastic resin (A) is 5 to 300%, preferably 5 to 250%, more preferably 5 to 150%. If the graft ratio of the resin (A) is less than 5%, its compatibility with the component (B) may be poor, causing deterioration of molding workability, wear resistance of the composition and surface appearance of the molded article. If the graft ratio of the resin (A) exceeds 300%, molding workability, wear resistance of the composition and surface appearance of the molded article may be deteriorated.

As seen from the graft ratio, the rubber-reinforced thermoplastic resin (A) comprises a mixture of graft polymer, and homopolymer or copolymer (not grafted) of monomer or monomeric mixture (b).

The graft ratio can be easily controlled by changing the kind and amount of the polymerization initiator, chain transfer agent, emulsifier, solvent, etc., as well as the polymerization time and temperature. It is also possible to change the graft ratio by the method of addition of the monomer or monomeric mixture (b). The methods of addition usable in the present invention include en bloc addition, portion-wise addition, continuous addition, and combinations of these methods.

Regarding the molecular weight of the rubber-reinforced thermoplastic resin (A) of the present invention, the intrinsic viscosity $[\eta]$ (measured in methyl ethyl ketone at 30°C) of the acetone insoluble matter which constitutes the matrix (ungrafted moiety) is 0.05 to 3.0 dl/g, preferably 0.1 to 1.0 dl/g, more preferably 0.15 to 0.8 dl/g, particularly 0.2 to 0.8 dl/g. If the intrinsic viscosity $[\eta]$ is less than 0.05 dl/g, molding workability, wear resistance and tear strength of the composition may be reduced. On the other hand, if the intrinsic viscosity exceeds 3.0 dl/g, molding workability, tear strength and surface appearance of the molded article may be deteriorated.

The intrinsic viscosity $[\eta]$, like the graft ratio, can also be easily controlled by changing the kind and amount of the polymerization initiator, chain transfer agent, emulsifier, solvent, etc., as well as the polymerization time and temperature. It is also possible to change the intrinsic viscosity $[\eta]$ by the method of addition of the monomer or monomeric mixture (b), the available addition methods including en bloc addition, portion-wise addition, continuous addition, and combinations of these methods.

The amount of the rubber-reinforced thermoplastic resin (A) used in the composition of the present invention is 1 to 50 parts by weight, preferably 1 to 30 parts by weight, based on 100 parts by weight of the component (A) and the component (B) combined. If the amount of the component (A) may be less than 1 part by weight, wear resistance of the composition is not improved. On the other hand, if its amount exceeds 50 parts by weight, miscibility may be deteriorated and also tear strength and tensile strength may lower.

The thermoplastic elastomers usable as component (B) in the present invention include styrene elastomers, 1,2-polybutadiene, diene rubbers, olefin elastomers, urethane elastomers, polyvinyl chloride elastomers, ester elastomers, fluorine resin elastomers, and ion-bonded elastomers (ionomers). These thermoplastic elastomers may be used either singly or as a mixture of two or more types. Styrene elastomers and 1,2-polybutadiene are preferred for use as the thermoplastic elastomer (B) in the present invention.

The styrene elastomer used in the present invention is specifically an aromatic vinyl monomer-conjugated diene block copolymer which includes the polymer blocks of at least one aromatic vinyl monomer and the polymer blocks of at least one conjugated diene compound, and which may be either straight chain type or radial type. Also, the conjugated diene block may be a random copolymer with a small quantity of an aromatic vinyl monomer, or it may be a so-called taper block in which the aromatic vinyl monomer content increases little by little.

The structure of the block copolymer is not specified; it may be $(A-B)_n$ type, $(A-B)_n$-A type or $(A-B)_n$-C type wherein A represents polymer block of aromatic vinyl monomer, B represents polymer block of conjugated diene compound, C represents coupling agent residue, and n is an integer of 1 or greater. It is of course possible to use a block copolymer in which the conjugated diene moiety has been hydrogenated.

As the examples of the aromatic vinyl monomers in the aromatic vinyl monomer-conjugated diene block copolymers usable as styrene elastomer in the present invention, there can be cited those shown above as the examples of the aromatic vinyl monomers usable as the monomer (b). Of these, styrene is preferred. These aromatic vinyl monomers may be used either singly or as a mixture of two or more types.

Examples of the conjugated dienes usable for the said block copolymers include 1,3-butadiene, isoprene, 2-methyl-1,3-butadiene, 2,3-diethyl-butadiene, 2-neopentyl-1,3-butadiene, 2-chloro-1,3-butadiene, 2-cyano-1,3-butadiene, substituted straight-chain conjugated pentadienes, and straight-chain and branched conjugated hexadienes. Among these dienes, 1,3-butadiene, isoprene and 2-methyl-1,3-butadiene are preferred.

The weight-average molecular weight of the said block copolymers is preferably within the range of 10,000 to 800,000, more preferably 20,000 to 500,000. The content of the aromatic vinyl monomer in the block copolymer is preferably 5 to 60% by weight, preferably 20 to 50% by weight.

In the present invention, it is not defined to use only one kind of block copolymer; it is possible to use two or more types of block copolymer differing in structure and/or aromatic vinyl monomer content.

The amount of the styrene elastomer used in the present invention is preferably less than 80 parts by weight, more preferably less than 60 parts by weight, especially preferably less than 40 parts by weight, based on 100 parts by weight of the thermoplastic elastomer composition. If the elastomer amount is not less than 80 parts by weight, surface appearance of the molded article may be deteriorated.

The 1,2-polybutadiene used in the present invention is the one in which the percentage of 1,2-vinyl bonding is preferably not less than 70%, more preferably not less than 80%, the degree of crystallinity is preferably 5 to 50%, more preferably 10 to 35%, and the intrinsic viscosity $[\eta]$ (measured in toluene at 30°C) is preferably not less than 0.5 dl/g, more preferably not less than 0.6 dl/g. It is possible to use a mixture of two or more kinds of 1,2-polybutadiene differing in 1,2-vinyl bonding percentage, degree of crystallinity and intrinsic viscosity $[\eta]$.

The amount of 1,2-polybutadiene used in the present invention is preferably not less than 20 parts by weight based on 100 parts by weight of the thermoplastic elastomer composition of the present invention. If the amount of 1,2-polybutadiene is less than 20 parts by weight, surface appearance of the molded article may be deteriorated.

Examples of the diene rubbers usable in the present invention include high-cis- and low-cis-butadiene rubbers (BR), high-cis-isoprene rubbers (IR), emulsion polymerized and solution polymerized styrene-butadiene rubbers (SBR), acrylonitrile-butadiene rubbers (NBR), ethylene propylene rubbers, chloroprene rubbers, butyl rubbers and natural rubbers. Of these diene rubbers, butadiene rubbers (BR) and styrene-butadiene rubbers (SBR) are preferred.

Mooney viscosity ($ML_{1+4}$, 100°C) of the butadiene rubber (BR) and styrene-butadiene rubber (SBR) used as component (B) is preferably 30 to 75.

The diene rubber is used in an amount of 30 to 90 parts by weight based on 100 parts by weight of the thermoplastic elastomer composition of the present invention. If the content of the diene rubber is outside the above-defined range, surface appearance of the molded article may be deteriorated.

As the thermoplastic elastomer (B), the commercially available products can be properly used.

The component (B) is used in an amount of 99 to 20 parts by weight, preferably 95 to 38 parts by weight, based on 100 parts by weight of the component (A) and the component (B) combined. If the amount of the component (B) exceeds 99 parts by weight, no desired improvement of wear resistance may be obtained, and if its amount is less than 20 parts by weight, the component miscibility may be poor and also the composition may be low in tear and tensile strength.

In the thermoplastic elastomer composition of the present invention, it is possible to blend the known thermoplastic resins and/or additives. Examples of the thermoplastic resins include polystyrene resins, polyethylene resins, polypropylene resins, polybutene resins, polyvinyl chloride resins, polyvinyl acetate resins, polyamide resins, thermoplastic polyester resins, polyacetal resins, and polycarbonate resins.

Examples of the additives blended in the composition of the present invention include fibrous fillers such as glass fiber, chemically surface treated glass fiber, carbon fiber, graphite, metallic fiber and titanium oxide; hollow fillers such as glass balloon, fly ash balloon and silica balloon; inorganic fillers such as light calcium carbonate, heavy calcium carbonate, various types of surface treated calcium carbonate, talc, magnesium hydroxide, mica, clay, barium sulfate, aluminum sulfate, calcium sulfate, magnesium carbonate, molybdenum disulfide, alumina, natural silicon, synthetic silicon, kaolin, diatomaceous earth, asbestos and carbon black; petroleum type softeners such as process oil, lubricant, paraffin, liquid paraffin, petroleum asphalt and Vaseline; coal tar and coal tar products such as coal tar pitch; fatty acid type softeners such as castor oil, linseed oil, rapeseed oil, soybean oil and coconut oil; waxes such as tall oil, factise oil, beeswax, carnauba wax and lanolin; fatty acids and fatty acid salts such as ricinoleic acid, palmitic acid, stearic acid, barium stearate, calcium stearate, barium lanolate and zinc lanolate; synthetic high polymeric substances such as petroleum resins; silicone oils such as liquid Thiokol dimethyl silicone and methylphenyl silicone; and plasticizers such as phthalic ester type, adipic ester type, sebacic ester type and phosphoric ester type.

As the tackifier, cumarone-indene resins, terpene phenol resins, xylene-formaldehyde resins and the like can be used.

As the colorant, inorganic and organic pigments, etc., can be used. As the foaming agent, sodium bicarbonate, ammonium carbonate, N,N'-dinitrosopentamethylenetetramine, azocarbonamide, azobisisobutyronitrile, benzenesulfonylhydrazide, toluenesulfonylhydrazide, calciumamide, p-toluenesufonylamide and the like can be used. As the foaming assistant, salicylic acid, phthalic acid, urea and the like can be used. Other known additives such as antioxidant, ultraviolet absorber, heat stabilizer, antistatic agent, flame retardant, lubricant, anti-fungus agent, mildewproofing agent, cellulosic materials such as woodmeal, etc., can be properly blended.

These additives are added as required, each in an amount not exceeding 300 parts by weight based on 100 parts by weight of the thermoplastic elastomer composition of the present invention.

The thermoplastic elastomer composition of the present invention can be produced by the method which is not specifically defined and in which mixing and melt kneading can be effected by using an ordinary mixing/kneading machine such as roll mill, kneader, Banbury mixer, screw extruder, feeder ruder extruder, continuous mixer, etc. The thermoplastic elastomer composition of the present invention can also be mixed by using a tumbler or a Henschel mixer. This mixing/melt kneading is preferably performed in a closed type mixing/kneading machine in an inert gas such as nitrogen gas atmosphere.

The mixing temperature is usually 100 to 180°C, preferably 100 to 150°C, and the mixing time is usually 5 to 20 minutes, preferably 5 to 10 minutes.

The thermoplastic elastomer composition according to the present invention has excellent moldability and can therefore be easily molded into high-quality articles by using various molding methods such as (foam) extrusion molding, blow molding, injection molding, calendering, vacuum or compression molding, inflation, etc.

Further, the thermoplastic elastomer composition of the present invention has excellent wear resistance and molding workability as well as high tear and tensile strength and is also capable of providing good surface appearance of the molded article, so that it can be applied to a wide scope of uses ranging from the non-crosslinked to the crosslinked product fields, and can be used for manufacturing a variety of industrial articles, household appliances, OA equipment, footwear sole materials (soles of men's and women's shoes, casual shoes, sports shoes, etc.), automobile articles, buffering materials, housing and construction materials, conveyor belts, packaging materials, etc.

EXAMPLES

The present invention is explained in further detail with reference to the referential examples, examples and comparative examples, all of which examples, however, are not meant to limit the scope of the present invention in any way.

In the following Referential Examples, Examples and Comparative Examples, all "parts" and "%" are by weight unless otherwise noted.

Also, in these Examples, measurements of the specified items were made by the methods described below.

Average particle size

The average particle size (diameter) was measured using a laser particle size analyzing system LPA-3100 mfd. by Ohtsuka Denshi Co., Ltd.

Gel content (toluene insolubles)

Described in the text above.

Graft ratio

A measured amount (x) of a graft copolymer (rubber-reinforced thermoplastic resin) was put into acetone and shaken by a shaker for 2 hours to dissolve the free copolymer, and this solution was centrifuged at 23,000 rpm for 30 minutes to obtain the insoluble matter. It was then dried by a vacuum dryer at 120°C for one hour to obtain the dried insoluble matter (y). The graft ratio was calculated from the following equation.

Graft ratio (%) = {[(y)-(x)×(rubber fraction of graft polymer)]/ [(x)×(rubber fraction of graft polymer)]}×100

Intrinsic viscosity [η]

The acetone insoluble matter after centrifuging, used for the measurement of the graft ratio described above, was perfectly dissolved in methylethyl ketone to prepare the five samples differing in concentration from each other, and reduced viscosity of each sample was measured by an Ubbellohde viscometer at 30°C. Intrinsic viscosity [η] was determined from the result of this measurement.

Mooney viscosity

Mooney viscosity was measured according to JIS K6300 under the conditions of: measuring temperature = 100°C; preheating time = one minute; measuring time = 4 minutes.

Weight-average molecular weight (Mw)

The Weight-average molecular weight was measured by a gel permeation chromatograph GPC-244 mfd. by Waters Inc., using TSK-gel-GMH×1 columns (2) of Toso Co., Ltd., and dimethylformamide as solvent at a flow rate of 0.8 ml/min and at a temperature of 23°C, and calibrated with a polystyrene standard sample.

Degree of crystallinity of 1,2-polybutadiene

The Degree of crystallinity of 1,2-polybutadiene was calculated by measured specific gravity.

Amount of bound styrene in styrene elastomer

The amount of bound styrene was determined from the refractive index.

Sample molding conditions

Molding was performed using a molding machine ISFA170FA (mfd. by Toshiba Machinery Co., Ltd.) at a cylinder temperature of 160°C and a mold temperature of 35°C under an injection pressure of 60 kg/cm$^2$.

Miscibility

Miscibility was rated according to the following criterion.

◯: There took place neither rotor racing nor excessive heat generation, and mixing could be effected with ease.
X: Mixing was very hard to conduct because of rotor racing and/or excessive heat generation.

Dispersibility

The sample was hot pressed into a thin plate by a resin press, and the state of dispersion of rubber particles was observed. The state of dispersion was evaluated according to the following criterion.

◯: Well dispersed.

X: Dispersed badly.

Wear resistance

The wear resistance was determined according to JIS K6301 DIN Abrasion Test as follows. DIN wear resistance testing machine under the following condition.

Rotation speed of a drum: 40/min.
Contact force: 10N
Test running distance: 40m

The volume amount of the worn out sample was calculated from the following equation by measuring the weight of the worn out sample:

$$\Delta V = \Delta G \times 200/(\rho \times S)$$

where

$\Delta V$: volume amount of the worn out sample (mm$^3$)

$\Delta G$: weight of the worn out sample (mg)

$\rho$: density (mg/ mm$^3$)

S: wear ability of abrasive cloth /test running distance (40m).

Tear strength

Determined according to JIS K6301.

Tensile strength

Determined according to JIS K6301.

Surface appearance of molded article

The flow marks, roughness, blushing, silver streaks and blooming on the surface of the molded article were visually observed and rated according to the following criterion.

○: Excellent

△: good

X: Unacceptable. The surface had unevenness.

Referential Example 1:

Preparation of rubber-like polymer (a)

100 parts of 1,3-butadiene, 60 parts of water, 2.4 parts of potassium rhodinate, 0.5 part of potassium phosphate, 0.1 part of potassium hydroxide, 0.3 part of t-dodecylmercaptan as chain transfer agent and 0.3 part of potassium persulfate were supplied to a 100 litre reactor having a stirrer and polymerized batchwise at 60 to 70°C for 30 hours.

The polymerization conversion was 95%. To this polymerization system, 0.2 part of N,N-diethylhydroxylamine was added as a terminator to terminate the reaction.

Then 1,3-butadiene was removed under reduced pressure to obtain a polybutadiene rubber latex (solids content: 56.2%). The gel content of the thus obtained polybutadiene rubber was 75%, and its average particle size was 0.27 μm.

The styrene-butadiene copolymers were obtained in the same way by changing the kind and formulation of the monomer(s), amount of the chain transfer agent, polymerization temperature and polymerization time. The average particle size and toluene insolubles content of the rubber-like polymer (a) are shown in Tables 1 and 2.

Referential Example 2:

Preparation of rubber-reinforced thermoplastic resins (A-1) to (A-14)

To a separable flask equipped with a dropping bottle, a condenser, a nitrogen inlet port and a stirrer, 60 parts (calculated as solids) of the rubber-like polymer (a) obtained in Referential Example 1, 0.5 part of potassium rhodinate as emulsifier and 100 parts of water were supplied and mixed, and then 9 parts of styrene, 3 parts of acrylonitrile, 0.5 part of t-butylmercaptan as molecular weight modifier and 0.2 part of cumene hydroperoxide as polymerization initiator were added. After heating to 70°C, 0.2 part of cumene hydroperoxide, 0.2 part of sodium pyrophosphate, 0.25 part of dextrose and 0.01 part of ferrous sulfate were added to carry out polymerization. One hour later, a mixture of the remaining 21 parts of styrene, 7 parts of acrylonitrile, 0.3 part of t-dodecylmercaptan, 40 parts of water and 0.15 part of cumene hydroperoxide was added dropwise over a period of 4 hours. On conclusion of this dropwise addition, 0.1 part of cumene hydroperoxide, 0.1 part of sodium pyrophosphate, 0.13 part of dextrose, 0.005 part of ferrous sulfate and 0.02 part of sodium dimethyldithiocarbamate were added to conduct an additional one-hour polymerization reaction. The polymerization conversion was 97.5%. The resulting polymer was coagulated with sulfuric acid and neutralized with sodium hydroxide, and the coagulated material was washed well with water and dried to obtain a powdery rubber-reinforced thermoplastic resin (A-1).

There were likewise obtained the rubber-reinforced thermoplastic resins (A-2) to (A-14) by changing the kind and formulation of the monomers, amount of the chain transfer agent, polymerization temperature and polymerization time as shown in Tables 1 and 2. The graft ratio and intrinsic viscosity [η] of the obtained rubber-reinforced thermoplastic resins (A-1) to (A-14) are shown in Tables 1 and 2.

Table 1

| (A) Rubber-reinforced thermoplastic resin | A-1 | A-2 | A-3 | A-4 |
|---|---|---|---|---|
| Formulation (parts) | | | | |
| (a) Rubber-like polymer | | | | |
| Polybutadiene | 60 | - | 60 | - |
| Styrene-butadiene copolymer (ST/BD=24/76) | - | 55 | - | 60 |
| (b) Monomers | | | | |
| Styrene | 40 | 30 | 30 | 40 |
| Acrylonitrile | - | 15 | 5 | - |
| Methyl methacrylate | - | - | 5 | - |
| Butyl acrylate | - | - | - | - |
| Methacrylic acid | - | - | - | - |
| Properties | | | | |
| Component (a) | | | | |
| Average particle size (μm) | 0.30 | 0.45 | 0.35 | 0.40 |
| Toluene insolubles | 75 | 60 | 65 | 70 |
| Component (A) | | | | |
| Graft ratio (%) | 30 | 45 | 55 | 40 |
| Intrinsic viscosity [η] | 0.25 | 0.32 | 0.35 | 0.25 |
| (A) Rubber-reinforced thermoplastic resin | A-5 | A-6 | A-7 | |
| Formulation (parts) | | | | |
| (a) Rubber-like polymer | | | | |
| Polybutadiene | 60 | 60 | 60 | |
| Styrene-butadiene copolymer (ST/BD=24/76) | - | - | - | |
| (b) Monomers | | | | |
| Styrene | 30 | 30 | 25 | |
| Acrylonitrile | 10 | - | 5 | |
| Methyl methacrylate | - | 10 | - | |
| Butyl acrylate | - | - | 5 | |
| Methacrylic acid | - | - | 5 | |
| Properties | | | | |
| Component (a) | | | | |
| Average particle size (μm) | 0.28 | 0.35 | 1.00 | |
| Toluene insolubles | 80 | 70 | 10 | |
| Component (A) | | | | |
| Graft ratio (%) | 50 | 40 | 50 | |
| Intrinsic viscosity [η] | 0.20 | 0.45 | 0.35 | |

Table 2

| (A) Rubber-reinforced thermoplastic resin | A-8 | A-9 | A-10 | A-11 |
|---|---|---|---|---|
| Formulation (parts) | | | | |
| (a) Rubber-like polymer | | | | |
| Polybutadiene | 10 | - | 10 | 60 |
| Styrene-butadiene copolymer (ST/BD=24/76) | - | 90 | - | - |
| (b) Monomers | | | | |
| Styrene | 80 | 5 | 80 | 30 |
| Acrylonitrile | 10 | - | 5 | 10 |
| Methyl methacrylate | - | 5 | 5 | - |
| Butyl acrylate | - | - | - | - |
| Methacrylic acid | - | - | - | - |
| Properties | | | | |
| Component (a) | | | | |
| Average particle size (µm) | 0.30 | 0.01 | 0.85 | 1.80 |
| Toluene insolubles | 10 | 30 | 50 | 20 |
| Component (A) | | | | |
| Graft ratio (%) | 110 | 8 | 450 | 3 |
| Intrinsic viscosity [η] | 0.25 | 0.30 | 0.45 | 0.35 |
| (A) Rubber-reinforced thermoplastic resin | A-12 | A-13 | A-14 | |
| Formulation (parts) | | | | |
| (a) Rubber-like polymer | | | | |
| Polybutadiene | - | 40 | 60 | |
| Styrene-butadiene copolymer (ST/BD=24/76) | 60 | - | - | |
| (b) Monomers | | | | |
| Styrene | 30 | 40 | 30 | |
| Acrylonitrile | - | - | 10 | |
| Methyl methacrylate | 5 | 10 | - | |
| Butyl acrylate | 5 | 5 | - | |
| Methacrylic acid | - | 5 | - | |
| Properties | | | | |
| Component (a) | | | | |
| Average particle size (µm) | 0.50 | 0.80 | 1.20 | |
| Toluene insolubles | 60 | 40 | 75 | |
| Component (A) | | | | |
| Graft ratio (%) | 20 | 50 | 25 | |
| Intrinsic viscosity [η] | 0.01 | 3.50 | 0.55 | |

Referential Example 3:

Preparation of thermoplastic elastomer (B)

The following materials were prepared as component (B):

Butadiene rubber (BR): laboratory trial product (Mooney viscosity ($ML_{1+4}$, 100°C): 40)
1,2-polybutadiene (RB830): commercial product, trade name: RB830 (crystallinity: 28%) produced by JSR Inc.
1,2-polybutadiene (RB835): commercial product, trade name: RB835 (crystallinity: 32%) produced by JSR Inc.
Styrene-butadiene block copolymer (SB1): commercial product, trade name: TR2000 (bound styrene: 40%) produced by JSR Inc.
Styrene-butadiene block copolymer (SB2): commercial product, trade name: TR2825 (bound styrene: 23%) produced by JSR Inc.
Styrene-butadiene block copolymer (SB3): commercial product, trade name: TR2601 (bound styrene: 30%) produced by JSR Inc.
Styrene-butadiene copolymer (SB4): commercial product, trade name: SL554 (bound styrene: 24%) produced by JSR Inc.
Styrene-isoprene block copolymer (SIS): commercial product, trade name: SIS5002 (bound styrene: 26%) produced by JSR Inc.

Examples 1 to 7 and Comparative Examples 1 to 7

Component (A) and component (B) were mixed with the formulations shown in Tables 3 and 4 and pelletized to obtain the thermoplastic elastomer compositions of the present invention, and the characteristic properties (regarding the specific items) of these compositions were evaluated. The results are shown in Tables 3 and 4.

Table 3

| Examples | 1 | 2 | 3 | 4 |
|---|---|---|---|---|
| Formulation (parts) | | | | |
| (A) Rubber-like thermoplastic resin | A-1 | A-2 | A-3 | A-4 |
| weight parts | 5 | 5 | 10 | 5 |
| (B) Thermoplastic elastomer composition | | | | |
| Butadiene rubber | 10 | – | – | – |
| RB830 | – | 10 | – | 10 |
| RB835 | – | – | 5 | – |
| SB1 | 85 | 85 | – | – |
| SB2 | – | – | 85 | – |
| SB3 | – | – | – | 85 |
| SB4 | – | – | – | – |
| SIS | – | – | – | – |
| Results of evaluations | | | | |
| Miscibility | ○ | ○ | ○ | ○ |
| Dispersibility | ○ | ○ | ○ | ○ |
| Abrasion resistance (mm$^3$) | 90 | 95 | 100 | 95 |
| Tear strength (kgf/cm) | 125 | 130 | 130 | 140 |
| Tensile strength (kgf/cm$^2$) | 75 | 80 | 75 | 80 |
| Surface appearance of molded article | ○ | ○ | ○ | ○ |

Table 3 (continued)

| Examples | 5 | 6 | 7 |
|---|---|---|---|
| Formulation (parts) | | | |
| (A) Rubber-like thermoplastic resin | A-5 | A-6 | A-7 |
|   weight parts | 10 | 5 | 5 |
| (B) Thermoplastic elastomer composition | | | |
|   Butadiene rubber | – | 10 | – |
|   RB830 | – | – | 10 |
|   RB835 | 5 | – | – |
|   SB1 | – | – | – |
|   SB2 | – | – | 85 |
|   SB3 | – | – | – |
|   SB4 | 85 | – | – |
|   SIS | – | 85 | – |
| Results of evaluations | | | |
| Miscibility | ○ | ○ | ○ |
| Dispersibility | ○ | ○ | ○ |
| Abrasion resistance ($mm^3$) | 120 | 135 | 140 |
| Tear strength (kgf/cm) | 130 | 125 | 130 |
| Tensile strength ($kgf/cm^2$) | 80 | 70 | 65 |
| Surface appearance of molded article | ○ | ○ | ○ |

Table 4

| Comparative Examples | 1 | 2 | 3 | 4 |
|---|---|---|---|---|
| Formulation (parts) | | | | |
| (A) Rubber-like thermoplastic resin | A-8 | A-9 | A-10 | A-11 |
| weight parts | 5 | 5 | 5 | 5 |
| (B) Thermoplastic elastomer composition | | | | |
| Butadiene rubber | 10 | – | – | – |
| RB830 | – | 10 | – | 10 |
| RB835 | – | – | 10 | – |
| SB1 | 85 | – | – | – |
| SB2 | – | 85 | – | – |
| SB3 | – | – | 85 | – |
| SB4 | – | – | – | 85 |
| SIS | – | – | – | – |
| Results of evaluations | | | | |
| Miscibility | ✕ | ✕ | ✕ | ✕ |
| Dispersibility | ◯ | ✕ | ✕ | ✕ |
| Abrasion resistance (mm$^3$) | 180 | 150 | 195 | 185 |
| Tear strength (kgf/cm) | 110 | 100 | 110 | 115 |
| Tensile strength (kgf/cm$^2$) | 55 | 55 | 60 | 65 |
| Surface appearance of molded article | ◯ | ✕ | ✕ | △ |

Table 4 (continued)

| Comparative Examples | 5 | 6 | 7 |
|---|---|---|---|
| Formulation (parts) | | | |
| (A) Rubber-like thermoplastic resin | A-12 | A-13 | A-14 |
| weight parts | 5 | 5 | 85 |
| (B) Thermoplastic elastomer composition | | | |
| Butadiene rubber | – | – | – |
| RB830 | – | 5 | 5 |
| RB835 | 10 | – | – |
| SB1 | – | – | – |
| SB2 | – | 85 | 10 |
| SB3 | – | – | – |
| SB4 | – | – | – |
| SIS | 85 | – | – |
| Results of evaluations | | | |
| Miscibility | ✕ | ✕ | ✕ |
| Dispersibility | ✕ | ✕ | ◯ |
| Abrasion resistance (mm$^3$) | 175 | 150 | 150 |
| Tear strength (kgf/cm) | 95 | 85 | 30 |
| Tensile strength (kgf/cm$^2$) | 60 | 55 | 25 |
| Surface appearance of molded article | ◯ | ✕ | ◯ |

As is seen from Table 3, any of the thermoplastic elastomer compositions according to the present invention excelled in molding workability such as miscibility and dispersibility, abrasion resistance, tear strength and tensile strength, and was capable of providing a good surface appearance of the molded article.

On the other hand, as is seen from Table 4, the composition of Comparative Example 1, in which the amount of the component (A) was less than 20 parts by weight, was poor in miscibility and low in abrasion resistance. In Comparative Example 2 where the amount of the component (A) exceeded 80 parts, compatibility with the component (D) lowered, resulting in deterioration of molding workability and surface appearance of the molded article. Comparative Example 3, in which the component (A) was less than 20 parts and the graft ratio of the component (C) exceeded 300%, was unsatisfactory in molding workability such as miscibility and dispersion and in abrasion resistance, and was also unable to provide a good surface appearance of the molded article. Comparative Example 4 where the graft ratio of the component (C) was less than 5% was also poor in molding workability, abrasion resistance and surface appearance of the molded article. Comparative Example 5, in which the intrinsic viscosity [η] was less than 0.05 dl/g, was unsatisfactory in molding workability, abrasion resistance and tear strength. In Comparative Example 6 where the intrinsic viscosity [η] exceeded 3.0 dl/g, molding workability such as dispersibility, tear strength and surface appearance of the molded article were poor. In Comparative Example 7 where the component (C) exceeded 80 parts, the elastomer was unable to exhibit its intrinsic properties, and miscibility, tear strength and tensile strength were low.

**Claims**

1. A thermoplastic elastomer composition comprising:

   (A) a reinforced thermoplastic resin obtainable by graft-polymerizing (a) an aromatic vinyl monomer or a mixture of an aromatic vinyl monomer and other vinyl monomer copolymerizable therewith in the presence of (b) a rubber or rubber-like polymer, said reinforced thermoplastic resin having a graft ratio of 5 to 300%, the intrinsic viscosity (η) of the ungrafted moiety being 0.05 to 3.0 dl/g as measured in 30°C methylethyl ketone, the percentage by weight of (b) being 20-80 based on the total of (a) and (b); and
   (B) a thermoplastic elastomer, the percentage of weight of (B) being 50-99 based on the total of (A) and (B).

2. A composition according to claim 1, wherein said percentage of (B) is 70-99.

3. A composition according to claim 1 or 2, wherein thermoplastic elastomer (B) comprises a styrene-based elastomer and a 1,2-polybutadiene.

4. A composition according to claim 3, wherein the styrene-based elastomer is an aromatic vinyl monomer-conjugated diene block copolymer.

5. A composition according to claim 4, wherein the weight-average molecular weight of aromatic vinyl monomer-conjugated diene block copolymer os 10000 to 800000 and the content of (b) aromatic vinyl monomer in the block copolymer is 5 to 60% by weight.

6. A composition according to claim 3, 4 or 5, wherein the amount of styrene-based elastomer is less than 80 parts by weight based on 100 parts by weight of the thermoplastic elastomer composition.

7. A composition according to any of claims 3 to 6, wherein the 1,2-polybutadiene has a 1,2-vinyl bonding of not less than 70%, a degree of crystallinity of 5 to 50% and an intrinsic viscosity (η) of not less than 0.5 dl/g measured in toluene at 30°C.

8. A composition according to any of claims 3 to 7, wherein the amount of 1,2-polybutadiene is not less than 20 parts by weight based on 100 parts by weight of the thermoplastic elastomer composition.

**European Patent Office**

## EUROPEAN SEARCH REPORT

Application Number

EP 00 30 1115

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 356 249 A (JAPAN SYNTHETIC RUBBER CO LTD) 28 February 1990 (1990-02-28)<br>* abstract *<br>* page 5, line 15 - line 47 *<br>* page 6, line 35 - line 45 *<br>* page 6, line 55 - page 7, line 2 *<br>* page 9, line 6 - line 42 *<br>* examples 30-35 *<br>* claims 1,9-11 * | 1-4 | C08L55/02<br>C08L53/02<br>C08L51/04<br>C08L101/00 |
| X | EP 0 721 962 A (JAPAN SYNTHETIC RUBBER CO LTD) 17 July 1996 (1996-07-17)<br>* abstract *<br>* page 2, line 43 - line 56 *<br>* page 4, line 34 - line 39 *<br>* page 5, line 47 - line 58 *<br>* page 6, line 4 - line 11 *<br>* page 6, line 33 - line 41 *<br>* examples 10-15 *<br>* claims 19-22 * | 1,2 | |
| A | EP 0 791 631 A (GEN ELECTRIC) 27 August 1997 (1997-08-27)<br>* abstract *<br>* page 2, line 39 - line 57 *<br>* page 3, line 9 - line 31 *<br>* page 3, line 43 - line 50 *<br>* page 4, line 8 - line 31 *<br>* page 5, line 49 - line 53 *<br>* page 7, line 20 - line 23 *<br>* claims 1,2 *<br><br>-/-- | 1-5 | **TECHNICAL FIELDS SEARCHED** (Int.Cl.7)<br><br>C08L |

The present search report has been drawn up for all claims

| Place of search | Date of completion of the search | Examiner |
|---|---|---|
| THE HAGUE | 23 June 2000 | Denis, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EP 1 031 609 A1

## EUROPEAN SEARCH REPORT

Application Number

EP 00 30 1115

European Patent
Office

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 2 056 465 A (BORG WARNER) 18 March 1981 (1981-03-18)<br>* abstract *<br>* page 2, line 53 - line 56 *<br>* page 3, line 5 - line 15 *<br>* page 4, line 15 - line 24 *<br>* page 4, line 51 - line 55 *<br>* examples 6-10 *<br>* claims 1,2 * | 1-5 | |

TECHNICAL FIELDS
SEARCHED    (Int.Cl.7)

The present search report has been drawn up for all claims

| Place of search | Date of completion of the search | Examiner |
|---|---|---|
| THE HAGUE | 23 June 2000 | Denis, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 00 30 1115

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2000

| Patent document cited in search report | | Publication date | Patent family member(s) | | Publication date |
|---|---|---|---|---|---|
| EP 0356249 | A | 28-02-1990 | JP | 2302414 A | 14-12-1990 |
| | | | JP | 2658392 B | 30-09-1997 |
| | | | JP | 2058514 A | 27-02-1990 |
| | | | JP | 2643343 B | 20-08-1997 |
| | | | DE | 68924511 D | 16-11-1995 |
| | | | DE | 68924511 T | 28-03-1996 |
| | | | US | 5306778 A | 26-04-1994 |
| | | | US | 5434219 A | 18-07-1995 |
| | | | KR | 149490 B | 15-05-1999 |
| EP 0721962 | A | 17-07-1996 | JP | 8193106 A | 30-07-1996 |
| | | | JP | 8311300 A | 26-11-1996 |
| | | | DE | 69607991 D | 08-06-2000 |
| | | | US | 5635565 A | 03-06-1997 |
| EP 0791631 | A | 27-08-1997 | US | 5814702 A | 29-09-1998 |
| | | | JP | 9324098 A | 16-12-1997 |
| GB 2056465 | A | 18-03-1981 | US | 4251642 A | 17-02-1981 |
| | | | BE | 884819 A | 16-12-1980 |
| | | | CA | 1141065 A | 08-02-1983 |
| | | | DE | 3030804 A | 26-03-1981 |
| | | | US | 4361675 A | 30-11-1982 |

EPO FORM P0459

For more details about this annex : see Official Journal of the European Patent Office, No. 12/82